# EUROPÄISCHE PATENTSCHRIFT

(11) **EP 3 844 384 B1**
(45) Veröffentlichungstag und Bekanntmachung des Hinweises auf die Patenterteilung: **22.10.2025**
(21) Anmeldenummer: 19762737.5
(22) Anmeldetag: 27.08.2019
(51) Int. Cl.: F03D 1/06

(54) **ROTOR MIT ROTORBLATT, WINDENERGIEANLAGE UND VERFAHREN ZUM OPTIMIEREN EINER WINDENERGIEANLAGE**
ROTOR COMPRISING A ROTOR BLADE, WIND TURBINE, AND METHOD FOR OPTIMISING A WIND TURBINE
ROTOR COMPRENANT UNE PALE DE ROTOR, ÉOLIENNE ET PROCÉDÉ D'OPTIMISATION D'UNE ÉOLIENNE

(30) Priorität: 30.08.2018 DE 102018121190
(43) Veröffentlichungstag der Anmeldung: 07.07.2021
(73) Patentinhaber: Wobben Properties GmbH, 26607 Aurich (DE)
(72) Erfinder: MESSING, Ralf, 26605 Aurich (DE); ZIEMS, Jan Carsten, 26607 Aurich (DE); RUBNER, Florian, 26607 Aurich (DE)
(74) Vertreter: Eisenführ Speiser
(86) Internationale Anmeldenummer: PCT/EP2019/072837
(87) Internationale Veröffentlichungsnummer: WO 2020/043722

(56) Entgegenhaltungen:
- EP-A1- 2 799 710
- EP-A2- 2 634 418
- US-A1- 2016 047 357
- GYATT G W: "DEVELOPMENT AND TESTING OF VORTEX GENERATORS FOR SMALL HORIZONTAL AXIS WIND TURBINES", FINAL REPORT DOE/NASA/0367-1, XX, XX, 1 July 1986 (1986-07-01), XP000861589

## Beschreibung

Die vorliegende Erfindung betrifft einen Rotor mit einem Rotorblatt für eine Windenergieanlage, eine zugehörige Windenergieanlage und einen zugehörigen Windpark. Die vorliegende Erfindung betrifft ebenso ein korrespondierendes Verfahren zum Optimieren einer Windenergieanlage. Die Erfindung betrifft insbesondere einen Rotor mit zweigeteilten Rotorblättern, das heißt solche, die wenigstens eine Trennstelle entlang einer Rotorblattlängsachse aufweisen.

Rotorblätter für Windenergieanlagen sind bekannt. An einem Rotor der Windenergieanlage montierte Rotorblätter weisen ein aerodynamisches Profil auf, das durch den anliegenden Wind eine aerodynamische Kraft erzeugt, die letztlich zur Erzeugung elektrischer Leistung der Windenergieanlage umgewandelt wird. Seit jeher war es eine Aufgabe, den Ertrag von Rotorblättern von Windenergieanlagen zu maximieren.

Das Ziel der Maximierung des Ertrages von Rotorblättern hat zu immer größeren Rotorblättern geführt, so dass Rotoren mit deutlich über 100 m Durchmesser inzwischen keine Seltenheit mehr sind. Während eine größere Länge des Rotorblattes Ertragsvorteile bietet, so stellen sich immer größere Herausforderungen in den Bereichen Herstellung und Transport.

Eine Möglichkeit, gerade auf die Transportprobleme zu reagieren, ist, die Rotorblätter in Längsrichtung zu teilen. Ein sogenanntes geteiltes oder zweigeteiltes Rotorblatt weist ein Außenblatt mit Blattspitze und ein Innenblatt auf, die an einer Trennstelle verbunden werden. Das Innenblatt verläuft also von der Rotornabe zu der Trennstelle, an der sich das Außenblatt bis zur Blattspitze anschließt. Natürlich kann auch das Außenblatt noch in mehrere Blattteile aufgeteilt werden. Alle Formen von Rotorblättern, die wenigstens eine Trennstelle aufweisen, werden nachfolgend mit dem Begriff geteiltes Rotorblatt bezeichnet.

Es ist jedoch auch bekannt, dass das Vorsehen der Trennstelle eine aerodynamische und vor allem aufgrund des damit verbundenen Gewichtes eine strukturelle Herausforderung darstellt.

Gleichzeitig steigt mit steigender Rotorblattlänge auch die Wahrscheinlichkeit von Strömungsabrissen in einem nabennahen Rotorblattbereich, das heißt in der Nähe des Zentrums der Rotorfläche. Dort müssen Profile mit hoher relativer Dicke verwendet werden, die vor allem bei verschmutzter Rotorblattoberfläche dazu neigen, dass die Strömung abreißt. So ist bekannt, in den nabennahen Bereichen Verwirbelungselemente, beispielsweise Vortexgeneratoren, an dem Rotorblatt anzuordnen, die dazu ausgebildet sind, Energie in die Strömungsgrenzschicht einzubringen und demnach ein Abreißen der Strömung zu verzögern. Die Verwirbelungselemente erzeugen unvermeidlich einen erhöhten Widerstand, so dass der Nutzen der Verwirbelungselemente gegen die damit verbundenen Nachteile abzuwiegen ist.

Das Deutsche Patent- und Markenamt hat in der Prioritätsanmeldung zu vorliegender Anmeldung folgenden Stand der Technik recherchiert: DE 10 2012 107 415 A1, US 2018/0038343 A1, EP 1 944 505 A1, EP 2 634 418 A2, EP 2 657 513 A2, EP 2 799 710 A1. Weiterer Stand der Technik ist offenbart in US 2016/047357 A1 und in: Gyatt G W: "Development and testing of vortex generators for small horizontal axis wind turbines", Final Report, DOE/NASA/0367-1, XX, XX, 1. Juli 1986.

Vor diesem Hintergrund war es eine Aufgabe der vorliegenden Erfindung, einen Rotor mit wenigstens einem wenigstens zweigeteilten Rotorblatt für Windenergieanlagen anzugeben, das einen verbesserten Ertrag ermöglicht.

Gemäß einem ersten Aspekt wird die Aufgabe durch einen Rotor mit wenigstens einem Rotorblatt für eine Windenergieanlage wie in Anspruch 1 definiert gelöst.

Die vorliegende Erfindung basiert auf der Erkenntnis, dass es einen wesentlichen Zusammenhang zwischen der Position der Trennstelle und der Erstreckung der Verwirbelungselemente in einen Außenbereich des Blattes gibt. Insbesondere hat sich herausgestellt, dass die Außenlänge, also die Länge, die sich das Verwirbelungselement über die Trennstelle hinaus in Richtung der Blattspitze erstreckt, ein bestimmtes Verhältnis zu der Gesamtlänge des Verwirbelungselementes nicht überschreiten soll, damit sich der davon erzeugte Widerstand in Grenzen hält.

Die besondere Relevanz der Trennstelle ergibt sich dadurch, dass das Rotorblattprofil aufgrund der Trennstelle besonders ausgelegt ist. So ist nämlich insbesondere ein dickeres, also ein Profil mit einer höheren relativen Dicke, das heißt einem Verhältnis aus Profildicke zu Profillänge, Profil vorzusehen als in einem ungeteilten Blatt, da die auf der Trennstelle wirkenden Lasten bei einem weniger dicken Profil zu groß sind. Die Position der Trennstelle steht also in Wechselwirkung mit der relativen Dicke des Blattes, die wiederum eine Wechselwirkung mit der Ausdehnung und Wirksamkeit der Verwirbelungselemente zeigt. Auch eine alternative Trennstelle an dünneren Profilen, insbesondere in einem weit äußeren Bereich des Rotorblattes, kann vorgesehen werden. Hierbei gilt analog, dass durch die Trennstelle eine besondere Anpassung der Auslegung des Rotorblattprofils gegeben ist.

Das Verwirbelungselement muss nicht durchgehend ausgebildet sein und kann auch, beispielsweise und vorzugsweise, Unterbrechungen in radialer Richtung aufweisen. Erfindungsgemäß ist das Verwirbelungselement aus mehreren Teilelementen ausgebildet. Hierbei richtet sich der Anfang und das Ende des Verwirbelungselementes immer nach dem absoluten Anfang bzw. dem absoluten Ende sämtlicher Teile des Verwirbelungselementes, also ändert sich auch in dem Fall, in dem das Verwirbelungselement mehrteilig bzw. mit Unterbrechungen ausgeführt ist, nicht.

Der anspruchsgemäß definierte Wert des Verhältnisses von kleiner als 0,25 vorzugsweise kleiner als 0,2 und besonders bevorzugt kleiner als 0,15, aus Außenlänge zu Gesamtlänge des Verwirbelungselementes trägt dieser Erkenntnis der Wechselwirkung aus Trennstellenposition sowie Position und Ausdehnung des Verwirbelungselemente Rechnung und hat sich zuverlässig als oberer Grenzwert gezeigt. Es sollte beachtet werden, dass die Außenlänge auch einen negativen Wert annehmen kann, dann nämlich, wenn das Verwirbelungselement überhaupt gar nicht bis zur Trennstelle in Rotorblattlängsrichtung nach außen reicht, sondern bereits vorher endet.

Bisher zum Einsatz kommende Windenergieanlagen mit zweiteiligen Blättern, beispielsweise Enercon E-126 EP4 bzw. E-141 EP4 weisen ebenfalls Verwirbelungselemente auf. Bei diesen, bekannten Windenergieanlagen sind die Verwirbelungselemente bisher bis zu einem weiter außen in der Nähe der Blattspitze liegenden Punkt ausgedehnt, so dass das Verhältnis aus Außenlänge zu Gesamtlänge einen größeren Wert annimmt. Es hat sich aber gezeigt, dass die Rotorblätter durch Modifikation der Verwirbelungselemente und Einhalten des erfindungsgemäßen Wertes des Verhältnisses erfindungsgemäß verbessert werden können.

In einer Ausführungsform weist das Verwirbelungselement einen oder mehrere Vortexgeneratoren auf. Die Vortexgeneratoren sind insbesondere auf einer Saugseite des Rotorblattes angeordnet.

Es ist bekannt, dass Profile von Rotorblättern von einer Vorderkante zu einer Hinterkante verlaufen, die mit einer sogenannten Druckseite und Saugseite verbunden sind. Eine ablösefreie Umströmung der Saugseite ist besonders für das Erreichen der auslegungsgemäßen Profilauftriebs- und Widerstandswerte wichtig.

In einer Ausführungsform sind die Vortexgeneratoren als paarweise angeordnete, im Wesentlichen senkrecht zu der Saugseite angeordnete Finnen ausgebildet. Die paarweise Anordnung ermöglicht, dass gegenläufige Wirbel in die Grenzschicht eingebracht werden. Die Ausbildung als Finnen, beispielsweise in Dreiecksform, ist eine besonders einfache Ausgestaltung von Vortexgeneratoren, wobei natürlich auch andere zweckmäßige Formen dem Fachmann bekannt sind. Hierbei ist als im Wesentlichen senkrecht zur Saugseite ein Winkel zwischen Rotorblattoberfläche und Finne zu verstehen, der über 45°, vorzugsweise über 60° und besonders bevorzugt wenigstens 80° beträgt.

Besonders bevorzugt weist das Verwirbelungselement ein Kunststoffmaterial, insbesondere kurzfaserverstärktes Kunststoffmaterial auf oder besteht daraus.

In einer Ausführungsform weisen die Vortexgeneratoren eine Geometrie als Funktion der Position in Längsrichtung des Rotorblattes auf. Es ist demnach bevorzugt, unterschiedliche Geometrien der Vortexgeneratoren je nach Position in Rotorblattlängsrichtung vorzusehen. So kann beispielsweise eine Höhe, das heißt eine Erstreckung senkrecht zur Rotorblattoberfläche, oder eine Länge, das heißt eine Erstreckung in der Ebene der Rotorblattoberfläche, umso größer sein, je näher der Vortexgenerator an dem Wurzelabschnitt ist. Alternativ oder zusätzlich kann auch ein Abstand zwischen zwei benachbarten Vortexgeneratoren und/oder ein Winkel zwischen Hauptanströmungsrichtung, insbesondere senkrecht zu der Vorderkante des Rotorblattes, und einer Richtung des Vortexgenerators mit einer Position in Längsrichtung variiert werden.

Der Anfang des Verwirbelungselementes grenzt an den Wurzelabschnitt an. Demnach erstreckt sich das Verwirbelungselement bis in einen Bereich in der Nähe der Rotorblattwurzel. In diesem Bereich ist die Geschwindigkeitskomponente durch die Rotordrehung am geringsten. Besonders bevorzugt liegt der Anfang des Verwirbelungselementes an einem Abschnitt des Rotorblattes, der ein aerodynamisches Profil aufweist. Als aerodynamisches Profil wird ein Profil verstanden, das in der Lage ist, Auftrieb zu erzeugen.

In einer Ausführungsform erhält die Außenlänge ein negatives Vorzeichen, wenn das Ende des Verwirbelungselementes in Längsrichtung näher an dem Wurzelabschnitt als die Trennstelle liegt. Das Verhältnis aus Außenlänge zu Gesamtlänge ist vorzugsweise negativ. Anders ausgedrückt erstreckt sich das Verwirbelungselement in dieser bevorzugten Ausführungsform nur in dem Innenbereich des Blattes. Dies kann dadurch erfolgen, dass die Trennstelle weit nach außen gezogen, und/oder aber das Verwirbelungselement entsprechend dimensioniert und angeordnet ist.

In einer Ausführungsform weist der Außenblattabschnitt eine weitere Trennstelle auf. Das Rotorblatt ist somit nicht auf eine Zweiteilung beschränkt, jedenfalls ist als die für die Bestimmung der Längen des Verwirbelungselementes relevante Trennstelle die von der Blattspitze aus betrachtet erste Trennstelle.

Ein Durchmesser des Rotors beträgt wenigstens 170 m. Besonders bei Rotoren mit entsprechend großer Auslegung kommt die erfindungsgemäße Anordnung und Auslegung des Verwirbelungselementes vorteilhaft zur Geltung.

Gemäß einem zweiten Aspekt wird die Aufgabe durch eine Windenergieanlage mit einem erfindungsgemäßen Rotor gelöst.

Gemäß einem dritten Aspekt wird die Aufgabe ferner durch einen Windpark mit mehreren Windenergieanlagen gemäß dem zweiten Aspekt gelöst.

Gemäß einem vierten Aspekt wird die Aufgabe ferner durch ein Verfahren zum Optimieren einer Windenergieanlage gemäß Anspruch 9 gelöst. Die Windenergieanlage weist einen aerodynamischen Rotor mit wenigstens einem Rotorblatt auf, wobei das Rotorblatt an einer Trennstelle in einen Innenblattabschnitt und einen Außenblattabschnitt geteilt ist, wobei der Innenblattabschnitt von einem Wurzelabschnitt zur Montage des Rotorblattes an einer Rotornabe der Windenergieanlage zu der Trennstelle reicht und sich der Außenblattabschnitt von der Trennstelle bis zu einer Rotorblattspitze anschließt, wobei eine Längsrichtung des Rotorblattes von dem Wurzelabschnitt zur Blattspitze definiert ist. Das Verfahren weist die folgenden Schritte auf: Bereitstellen und Montieren wenigstens eines Verwirbelungselementes, das eine Erstreckung in Längsrichtung des Rotorblattes aufweist, wobei ein Abstand zwischen einem dem Wurzelabschnitt zugewandten Anfang und einem der Rotorblattspitze zugewandten Ende des Verwirbelungselementes in Längsrichtung als Gesamtlänge bezeichnet wird und wobei ein Abstand zwischen der Trennstelle und dem äußeren Ende des Verwirbelungselementes als Außenlänge bezeichnet wird, wobei das Bereitstellen und Montieren des Verwirbelungselementes derart erfolgt, dass ein Verhältnis aus Außenlänge zu Gesamtlänge kleiner als 0,25, vorzugsweise kleiner als 0,2 und besonders bevorzugt kleiner als 0,15, beträgt.

Das erfindungsgemäße Verfahren ermöglicht die gleichen Vorteile zu erreichen wie der erfindungsgemäße Rotor mit Rotorblatt und lässt sich auf gleiche Weise mit den für den Rotor mit Rotorblatt beschriebenen Ausführungsformen kombinieren.

Weitere Vorteile und Ausgestaltungen werden nachfolgend mit Verweis auf die beigefügten Zeichnungen beschrieben. Hierbei zeigen:
- Fig. 1: schematisch und exemplarisch eine Windenergieanlage und
- Fig. 2: schematisch und exemplarisch ein Rotorblatt einer Windenergieanlage.

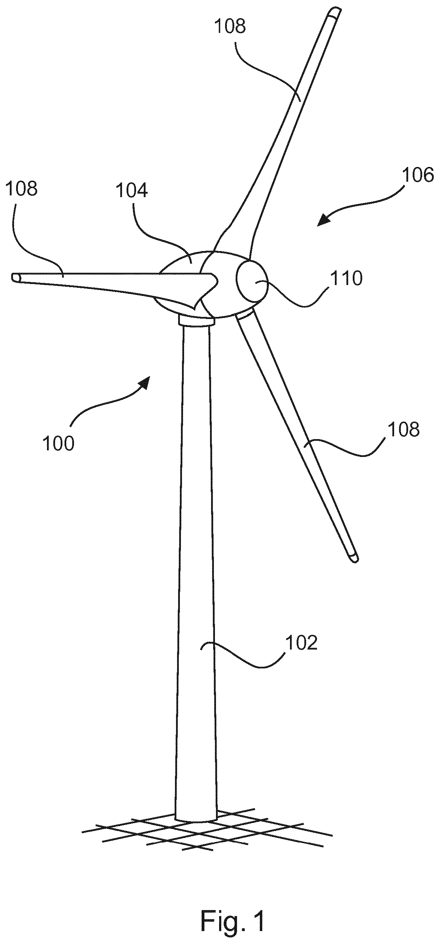

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Fig. 1 eine Windenergieanlage als solche schematisch, so dass eine vorgesehene Anordnung von Verwirbelungselementen nicht eindeutig erkennbar ist.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Die Rotorblätter 108 sind in ihrem Blattwinkel einstellbar.

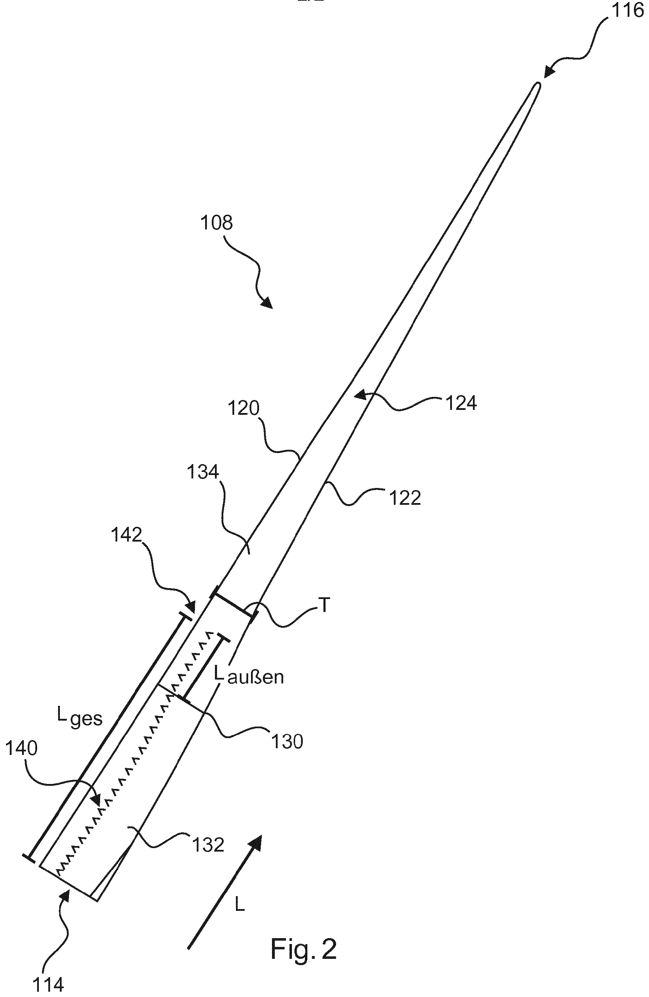

Fig. 2 zeigt eine schematische Ansicht eines einzelnen Rotorblattes 108 mit einer Rotorblattvorderkante 120 sowie einer Rotorblatthinterkante 122. Abgebildet ist eine Draufsicht auf eine Saugseite 124 des Rotorblattes, die gegenüberliegende Druckseite ist in der Ansicht nicht sichtbar.

Das Rotorblatt 108 weist eine Rotorblattwurzel 114 und eine Rotorblattspitze 116 auf. Die Länge zwischen der Rotorblattwurzel 114 und der Rotorblattspitze 116 wird als Rotorblattlänge R entlang einer Längsrichtung L bezeichnet. Der Abstand zwischen Rotorblattvorderkante 120 und Rotorblatthinterkante 122 wird als Profiltiefe T bezeichnet. An der Rotorblattwurzel 114 oder im Allgemeinen in dem Bereich nahe der Rotorblattwurzel 114 weist das Rotorblatt 108 eine große Profiltiefe T auf. An der Rotorspitze 116 ist die Profiltiefe T dagegen sehr viel kleiner.

In Längsrichtung L des Rotorblattes 108 ist etwa in einem mittleren Bereich eine Trennstelle 130 vorgesehen. Die Trennstelle teilt das Rotorblatt in zwei Abschnitte, einen Innenblattabschnitt 132 und einen Außenblattabschnitt 134. Der Innenblattabschnitt 132 reicht von dem Bereich der Rotorblattwurzel 114 bis zur Trennstelle 130 und der Außenblattbereich 134 schließt sich an die Trennstelle 130 an und reicht bis zur Rotorblattspitze 116. Natürlich sind auch mehr als eine Trennstelle 130 vorstellbar, wobei dann der Außenblattbereich 134 in mehrere Teile aufgeteilt wird. An der Blatttrennstelle 130 wird das Rotorblatt 108 vor bzw. bei der Montage am Aufstellungsort zusammengefügt.

In der in Fig. 2 gezeigten schematischen Draufsicht auf die Saugseite 124 ist ferner ein Verwirbelungselement 140 angeordnet. In anderen Ausführungen kann das Verwirbelungselement 140 auch beispielsweise auf der Druckseite angeordnet sein. Das Verwirbelungselement 140 verzögert eine Strömungsablösung in dem Bereich, in dem das Verwirbelungselement 140 angeordnet ist durch zusätzlichen Energieeintrag in die Grenzschicht. Verschiedene Arten von Verwirbelungselemente 140 sind bekannt, einschließlich aktiver und passiver Verwirbelungselemente.

Kern der vorliegenden Erfindung ist nun, dass das Zusammenwirken von Trennstelle 130 und Erstreckung des Verwirbelungselementes 140 in Längsrichtung L des Rotorblattes 108 gefunden wurde. Eine Gesamterstreckung L_{ges} bezeichnet die Erstreckung des Verwirbelungselementes 140 ausgehend von der Rotorblattwurzel 114 in Längsrichtung L bis zu einem radial äußeren Ende 142. Eine äußere Länge L_{außen} des Verwirbelungselementes 140 wird als Länge in Längsrichtung L ausgehend von der Blatttrennstelle 130 bis zu dem radial äußeren Ende 142 des Verwirbelungselementes 140 bezeichnet. Der Wert von L_{außen} wird für den Fall, dass die Trennstelle 130 weiter außen als das Ende 142 des Verwirbelungselementes 140 liegt, ein negatives Vorzeichen erhalten.

Für die Beurteilung, ob die Anordnung des Verwirbelungselementes 140 vorteilhaft ist oder nicht, wird ein Verhältnis der äußeren Länge oder Außenlänge L_{außen} zu der Gesamtlänge L_{ges} gebildet. Das Verhältnis wird als vorteilhaft angesehen, sobald es einen Wert von höchstens 0,25 erreicht. Anders ausgedrückt, die Blatttrennstelle 130 muss verhältnismäßig weit außen bezüglich der Gesamtlänge des Verwirbelungselementes 140 sein.

Dabei kann die Trennstelle 130 auch weiter außerhalb als das Ende 142 des Verwirbelungselementes 140 liegen, unvorteilhaft ist jedoch, wenn sich das Verwirbelungselement 140 derart nach außen erstreckt, dass das Verhältnis aus L_{außen} zu L_{ges} größer als 0,25 wird.

Es ist eine Erkenntnis der vorliegenden Erfindung, dass sich weiter nach außen erstreckende Verwirbelungselemente übermäßig Widerstand erzeugen, während sie die strömungsabrissverzögernde Wirkung nicht mehr in dem Maße bewirken, dass eine im Ergebnis effizienzsteigernde Gesamtbetrachtung folgt.

Insbesondere ist bei dem Verhältnis die bei zweigeteilten Rotorblättern 108 zu berücksichtigende besondere Geometrie und Aerodynamik der Trennstelle 130 von Relevanz. So ist die besondere Erkenntnis der vorliegenden Erfindung, dass die Erstreckung des Verwirbelungselementes 140 in Bezug zu der Position der Trennstelle 130 zu setzen ist. Erfindungsgemäß hat die Windenergieanlage einen Rotordurchmesser D von mindestens 170 m, da besonders bei großen Rotoren die Vorteile des Verwirbelungselementes 140 und der Mehrteilung der Rotorblätter 108 voll zur Geltung kommen.

## Patentansprüche

1. Rotor (106) mit wenigstens einem Rotorblatt (108) für eine Windenergieanlage (100), wobei das Rotorblatt (108) vor der Montage an der Windenergieanlage (100) an einer Trennstelle (130) in einen Innenblattabschnitt (132) und einen Außenblattabschnitt (134) geteilt ist, wobei der Innenblattabschnitt (132) von einem Wurzelabschnitt (114) zur Montage des Rotorblattes (108) an einer Rotornabe der Windenergieanlage (100) zu der Trennstelle (130) reicht und sich der Außenblattabschnitt (134) von der Trennstelle (130) bis zu einer Rotorblattspitze (116) anschließt,
wobei eine Längsrichtung (L) des Rotorblattes (108) von dem Wurzelabschnitt zur Blattspitze definiert ist,
wobei das Rotorblatt (108) wenigstens ein Verwirbelungselement (140) aufweist,
wobei das Verwirbelungselement (140) eine Erstreckung in Längsrichtung (L) des Rotorblattes (108) aufweist und aus mehreren Teilelementen ausgebildet ist, wobei sich der Anfang und das Ende des Verwirbelungselementes immer nach dem absoluten Anfang bzw. dem absoluten Ende sämtlicher Teile des Verwirbelungselementes richtet,
wobei ein Abstand zwischen einem dem Wurzelabschnitt (114) zugewandten Anfang und einem der Rotorblattspitze (116) zugewandten Ende des Verwirbelungselementes (140) in Längsrichtung (L) als Gesamtlänge (L_{ges}) bezeichnet wird und
wobei ein Abstand zwischen der Trennstelle (130) und dem äußeren Ende (142) des Verwirbelungselementes (140) als Außenlänge (L_{außen}) bezeichnet wird,
wobei ein Verhältnis aus Außenlänge (L_{außen}) zu Gesamtlänge (L_{ges}) kleiner als 0,25, vorzugsweise kleiner als 0,2 und besonders bevorzugt kleiner als 0,15 beträgt, wobei der Anfang des Verwirbelungselementes (140) an den Wurzelabschnitt (114) angrenzt, und
ein Durchmesser des Rotors (106) wenigstens 170 m beträgt.

2. Rotor (106) nach Anspruch 1, wobei das Verwirbelungselement (140) einen oder mehrere Vortexgeneratoren aufweist, die insbesondere auf einer Saugseite (124) des Rotorblattes (108) angeordnet sind.

3. Rotor (106) nach Anspruch 2, wobei die Vortexgeneratoren als paarweise angeordnete, senkrecht zu der Saugseite (124) angeordnete Finnen ausgebildet sind.

4. Rotor (106) nach Anspruch 3, wobei die Vortexgeneratoren eine Geometrie als Funktion der Position in Längsrichtung (L) des Rotorblattes (108) aufweisen.

5. Rotor (106) nach einem der vorstehenden Ansprüche, wobei die Außenlänge (L_{außen}) ein negatives Vorzeichen erhält, wenn das Ende des Verwirbelungselementes (140) in Längsrichtung (L) näher an dem Wurzelabschnitt (114) als die Trennstelle (130) liegt,
wobei das Verhältnis aus Außenlänge (L_{außen}) zu Gesamtlänge (L_{ges}) negativ ist.

6. Rotor (106) nach einem der vorstehenden Ansprüche, wobei der Außenblattabschnitt (134) eine weitere Trennstelle (130) aufweist.

7. Windenergieanlage (100) mit einem Rotor (106) nach einem der vorstehenden Ansprüche.

8. Windpark mit mehreren Windenergieanlagen (100) nach Anspruch

9. Verfahren zum Optimieren einer Windenergieanlage (100), wobei die Windenergieanlage (100) einen aerodynamischen Rotor (106) mit wenigstens einem Rotorblatt (108) aufweist, wobei das Rotorblatt (108) an einer Trennstelle (130) in einen Innenblattabschnitt (132) und einen Außenblattabschnitt (134) geteilt ist, wobei der Innenblattabschnitt (132) von einem Wurzelabschnitt (114) zur Montage des Rotorblattes (108) an einer Rotornabe der Windenergieanlage (100) zu der Trennstelle (130) reicht und sich der Außenblattabschnitt (134) von der Trennstelle (130) bis zu einer Rotorblattspitze (116) anschließt,
wobei eine Längsrichtung (L) des Rotorblattes (108) von dem Wurzelabschnitt (114) zur Rotorblattspitze (116) definiert ist,
wobei das Verfahren die folgenden Schritte aufweist:
Bereitstellen und Montieren wenigstens eines Verwirbelungselementes (140), das eine Erstreckung (L_{ges}) in Längsrichtung (L) des Rotorblattes (108) aufweist und aus mehreren Teilelementen ausgebildet ist, wobei sich der Anfang und das Ende des Verwirbelungselementes immer nach dem absoluten Anfang bzw. dem absoluten Ende sämtlicher Teile des Verwirbelungselementes richtet, wobei ein Abstand zwischen einem dem Wurzelabschnitt (114) zugewandten Anfang und einem der Rotorblattspitze (116) zugewandten Ende des Verwirbelungselementes (140) in Längsrichtung (L) als Gesamtlänge (L_{ges}) bezeichnet wird und wobei ein Abstand zwischen der Trennstelle (130) und dem äußeren Ende des Verwirbelungselementes (140) als Außenlänge (L_{außen}) bezeichnet wird,
wobei das Bereitstellen und Montieren des Verwirbelungselementes (140) derart erfolgt, dass ein Verhältnis aus Außenlänge (L_{außen}) zu Gesamtlänge (L_{ges}) kleiner als 0,25, vorzugsweise kleiner als 0,2 und besonders bevorzugt kleiner als 0,15, beträgt,
wobei der Anfang des Verwirbelungselementes (140) an den Wurzelabschnitt (114) angrenzt, und
ein Durchmesser des Rotors (106) wenigstens 170 m beträgt.

## Claims

1. Rotor (106) with at least one rotor blade (108) for a wind turbine (100), wherein, prior to being mounted on the wind turbine (100), the rotor blade (108) is split at a parting point (130) into an inner blade section (132) and an outer blade section (134), wherein the inner blade section (132) extends from a root section (114) for mounting the rotor blade (108) on a rotor hub of the wind turbine (100) to the parting point (130), and the outer blade section (134) follows from the parting point (130) as far as a rotor blade tip (116),
wherein a longitudinal direction (L) of the rotor blade (108) is defined from the root section to the blade tip,
wherein the rotor blade (108) has at least one swirl element (140),
wherein the swirl element (140) has an extent in the longitudinal direction (L) of the rotor blade (108), and is formed from multiple sub-elements, wherein the start and the end of the swirl element are always based on the absolute start and the absolute end, respectively, of all the parts of the swirl element,
wherein a distance between a start, facing toward the root section (114), and an end, facing toward the rotor blade tip (116), of the swirl element (140) in the longitudinal direction (L) is referred to as total length (Lₜₒₜ), and
wherein a distance between the parting point (130) and the outer end (142) of the swirl element (140) is referred to as outer length (Lₒᵤₜₑᵣ),
wherein a ratio of outer length (Lₒᵤₜₑᵣ) to total length (Lₜₒₜ) is less than 0.25, preferably less than 0.2, and particularly preferably less than 0.15,
wherein
the start of the swirl element (140) is adjacent to the root section (114), and
a diameter of the rotor (106) is at least 170 m.

2. Rotor (106) as claimed in claim 1, wherein the swirl element (140) has one or more vortex generators, which are arranged in particular on a suction side (124) of the rotor blade (108).

3. Rotor (106) as claimed in claim 2, wherein the vortex generators are formed as fins which are arranged in pairs and which are arranged so as to be perpendicular to the suction side (124).

4. Rotor (106) as claimed in claim 3, wherein the vortex generators have a geometry as a function of position in the longitudinal direction (L) of the rotor blade (108).

5. Rotor (106) as claimed in one of the preceding claims, wherein the outer length (Lₒᵤₜₑᵣ) acquires a negative sign if the end of the swirl element (140), in the longitudinal direction (L), is situated closer to the root section (114) than the parting point (130),
wherein the ratio of outer length (Lₒᵤₜₑᵣ) to total length (Lₜₒₜ) is negative.

6. Rotor (106) as claimed in one of the preceding claims, wherein the outer blade section (134) has a further parting point (130).

7. A wind turbine (100) having a rotor (106) according to one of the preceding claims.

8. A wind farm having multiple wind turbines (100) as claimed in claim 7.

9. A method for optimizing a wind turbine (100), wherein the wind turbine (100) has an aerodynamic rotor (106) having at least one rotor blade (108), wherein the rotor blade (108) is split at a parting point (130) into an inner blade section (132) and an outer blade section (134), wherein the inner blade section (132) extends from a root section (114) for mounting the rotor blade (108) on a rotor hub of the wind turbine (100) to the parting point (130), and the outer blade section (134) follows from the parting point (130) as far as a rotor blade tip (116),
wherein a longitudinal direction (L) of the rotor blade (108) is defined from the root section (114) to the rotor blade tip (116),
wherein the method comprises the following steps:
providing and mounting at least one swirl element (140) which has an extent (Lₜₒₜ) in the longitudinal direction (L) of the rotor blade (108) and is formed from multiple sub-elements, wherein the start and the end of the swirl element are always based on the absolute start and the absolute end, respectively, of all the parts of the swirl element, wherein a distance between a start, facing toward the root section (114), and an end, facing toward the rotor blade tip (116), of the swirl element (140) in the longitudinal direction (L) is referred to as total length (Lₜₒₜ), and wherein a distance between the parting point (130) and the outer end of the swirl element (140) is referred to as outer length (Lₒᵤₜₑᵣ),
wherein the swirl element (140) is provided and mounted in such a way that a ratio of outer length (Lₒᵤₜₑᵣ) to total length (Lₜₒₜ) is less than 0.25, preferably less than 0.2, and particularly preferably less than 0.15,
wherein
the start of the swirl element (140) is adjacent to the root section (114) and
a diameter of the rotor (106) is at least 170 m.

## Revendications

1. Rotor (106) avec au moins une pale de rotor (108) pour une éolienne (100), dans lequel la pale de rotor (108) est divisée en une section de pale intérieure (132) et une section de pale extérieure (134) avant d'être montée sur l'éolienne (100) sur un point de séparation (130), dans lequel la section de pale intérieure (132) va d'une section de base (114), pour monter la pale de rotor (108) sur un moyeu de rotor de l'éolienne (100), au point de séparation (130), et la section de pale extérieure (134) se raccorde du point de séparation (130) à une pointe de pale de rotor (116),
dans lequel une direction longitudinale (L) de la pale de rotor (108) est définie de la section de base à la pointe de pale,
dans lequel la lame de rotor (108) présente au moins un élément de tourbillonnement (140),
dans lequel l'élément de tourbillonnement (140) présente une extension dans la direction longitudinale (L) de la pale de rotor (108) et est réalisé à partir de plusieurs éléments partiels, dans lequel le début et la fin de l'élément de tourbillonnement sont toujours orientés vers le début absolu ou la fin absolue de toutes les parties de l'élément de tourbillonnement,
dans lequel une distance entre un début tourné vers la section de base (114) et une extrémité tournée vers la pointe de pale de rotor (116) de l'élément de tourbillonnement (140) dans la direction longitudinale (L) est désignée par longueur totale (Lₜₒₜ) et
dans lequel une distance entre le point de séparation (130) et l'extrémité extérieure (142) de l'élément de tourbillonnement (140) est désignée par longueur extérieure (L_{extérieure}),
dans lequel un rapport entre la longueur extérieure (L_{extérieure}) et la longueur totale (Lₜₒₜ) est inférieur à 0,25, de préférence est inférieur à 0,2 et de manière particulièrement préférée est inférieur à 0,15,
dans lequel le début de l'élément de tourbillonnement (140) est adjacent à la section de base (114), et
un diamètre du rotor (106) est d'au moins 170 m.

2. Rotor (106) selon la revendication 1, dans lequel l'élément de tourbillonnement (140) présente un ou plusieurs générateurs de vortex qui sont disposés en particulier sur un côté d'aspiration (124) de la pale de rotor (108).

3. Rotor (106) selon la revendication 2, dans lequel les générateurs de vortex sont réalisés sous forme d'ailettes disposées par paire, perpendiculairement au côté d'aspiration (124).

4. Rotor (106) selon la revendication 3, dans lequel les générateurs de vortex présentent une géométrie comme une fonction de la position dans la direction longitudinale (L) de la pale de rotor (108).

5. Rotor (106) selon l'une quelconque des revendications précédentes, dans lequel la longueur extérieure (L_{extérieure}) reçoit un signe négatif lorsque l'extrémité de l'élément de tourbillonnement (140) se situe, dans la direction longitudinale (L), davantage à proximité de la section de base (114) que le point de séparation (130),
dans lequel le rapport entre la longueur extérieure (L_{extérieure}) et la longueur totale (Lₜₒₜ) est négatif.

6. Rotor (106) selon l'une quelconque des revendications précédentes, dans lequel la section de lame extérieure (134) présente un autre point de séparation (130).

7. Éolienne (100) avec un rotor (106) selon l'une quelconque des revendications précédentes.

8. Parc éolien avec plusieurs éoliennes (100) selon la revendication 7.

9. Procédé d'optimisation d'une éolienne (100), dans lequel l'éolienne (100) présente un rotor aérodynamique (106) comportant au moins une pale de rotor (108), dans lequel la pale de rotor (108) est divisée en une section de pale intérieure (132) et une section de pale extérieure (134) sur un point de séparation (130), dans lequel la section de pale intérieure (132) va d'une section de base (114), pour monter la pale de rotor (108) sur un moyeu de rotor de l'éolienne (100), au point de séparation (130) et la section de pale extérieure (134) se raccorde du point de séparation (130) à une pointe de pale de rotor (116),
dans lequel une direction longitudinale (L) de la pale de rotor (108) est définie de la section de base (114) à la pointe de pale de rotor (116),
dans lequel le procédé présente des étapes suivantes :
de mise à disposition et de montage d'au moins un élément de tourbillonnement (140), qui présente une extension (Lₜₒₜ) dans la direction longitudinale (L) de la pale de rotor (108) et qui est constitué de plusieurs éléments partiels, dans lequel le début et la fin de l'élément de tourbillonnement sont toujours orientés vers le début absolu ou l'extrémité absolue de toutes les parties de l'élément de tourbillonnement, dans lequel une distance entre un début tourné vers la section de base (114) et une extrémité de l'élément de tourbillonnement (140) tournée vers la pointe de pale de rotor (116) dans la direction longitudinale (L) est désignée par longueur totale (Lₜₒₜ) et dans lequel une distance entre le point de séparation (130) et l'extrémité extérieure de l'élément de tourbillonnement (140) est désignée par longueur extérieure (L_{extérieure}),
dans lequel la mise à disposition et le montage de l'élément de tourbillonnement (140) s'effectuent de telle manière qu'un rapport entre la longueur extérieure (L_{extérieure}) et la longueur totale (Lₜₒₜ) est inférieur à 0,25, de préférence est inférieur à 0,2 et de manière particulièrement préférée est inférieur à 0,15,
dans lequel le début de l'élément de tourbillonnement (140) est adjacent à la section de base (114), et
un diamètre du rotor (106) est d'au moins 170 m.
